(19) **Europäisches Patentamt European Patent Office Office européen des brevets**

(11) **EP 4 247 678 B1**

(12) **FASCICULE DE BREVET EUROPEEN**

(45) Date de publication et mention de la délivrance du brevet:
**18.02.2026 Bulletin 2026/08**

(21) Numéro de dépôt: **21811035.1**

(22) Date de dépôt: **16.11.2021**

(51) Classification Internationale des Brevets (IPC):
**B60W 30/045** *(2012.01)*    **B60K 6/48** *(2007.10)*
**B60K 6/52** *(2007.10)*    **B60W 20/15** *(2016.01)*
**B60K 7/00** *(2006.01)*    **B62K 5/027** *(2013.01)*

(52) Classification Coopérative des Brevets (CPC):
**B60W 30/045; B60K 6/48; B60K 6/52;**
**B60W 20/15; B62K 5/08;** B60K 7/0007;
B60W 2300/367; B60W 2420/905; B60W 2510/202;
B60W 2520/10; B60W 2520/14; B60W 2520/16;
B60W 2520/18; B60W 2540/10; B60W 2540/18;
(Cont.)

(86) Numéro de dépôt international:
**PCT/EP2021/081772**

(87) Numéro de publication internationale:
**WO 2022/106384 (27.05.2022 Gazette 2022/21)**

(54) **PROCEDE D' ASSISTANCE AU VIRAGE POUR UN VEHICULE A TROIS ROUES, PROGRAMME D'ORDINATEUR ET VÉHICULE**

VERFAHREN ZUR UNTERSTÜTZUNG BEI KURVENFAHRT FÜR DREIRÄDRIGES FAHRZEUG, COMPUTERPROGRAMM SOWIE FAHRZEUG

CORNERING ASSISTANCE METHOD FOR THREE-WHEELED VEHICLE, COMPUTER PROGRAM AND VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.11.2020 FR 2011800**

(43) Date de publication de la demande:
**27.09.2023 Bulletin 2023/39**

(73) Titulaire: **Furion**
**72100 Le Mans (FR)**

(72) Inventeurs:
• **CHAUVELIER, Eric**
**78320 Le Mesnil Saint Denis (FR)**
• **EVENISSE, Marc**
**72000 Le Mans (FR)**

(74) Mandataire: **Fidal Innovation**
**4-6 avenue d'Alsace**
**92400 Courbevoie (FR)**

(56) Documents cités:
EP-A1- 3 421 341      EP-A2- 3 115 241
DE-A1- 102017 126 087

(52) Classification Coopérative des Brevets (CPC):
(Cont.)B60W 2720/40; B60W 2720/403;
B60W 2720/406; B60Y 2200/122; B62K 5/027;
B62K 21/00; Y02T 10/62

**Description**

**DOMAINE DE L'INVENTION**

La présente invention se rapporte au domaine de l'assistance au virage d'un véhicule roulant motorisé.

Plus précisément, l'invention se rapporte à un procédé d'assistance au virage d'un véhicule équipé de deux roues directrices et une roue non directrice.

**ARRIERE-PLAN TECHNOLOGIQUE**

La modification de la direction d'un véhicule n'est pas obtenue de la même manière pour un véhicule à quatre roues et pour un véhicule à deux roues.

Dans le premier cas, le fait de tourner le volant va modifier la direction des roues directrices et permettre au véhicule de tourner du côté vers lequel le volant a tourné. Du fait de la présence des quatre roues, en général placées aux quatre coins du bas de caisse de véhicule, celui-ci ne s'incline que faiblement en virage sur une route horizontale.

Dans le cas d'un véhicule à deux roues, le virage peut être obtenu par l'inclinaison du deux-roues, notamment en modifiant la répartition de la masse du pilote par rapport au plan vertical médian du véhicule lorsqu'il ne tourne pas. Du fait de l'adhérence des roues sur la route, la route exerce sur les roues du véhicule ainsi incliné une force de réaction présentant une composante horizontale, qui se traduit par une modification de la direction de déplacement du véhicule.

Deux régimes sont à distinguer. A basse vitesse, le pilote tourne le guidon du côté gauche (respectivement droit) pour diriger le véhicule vers la gauche (respectivement vers la droite) et se penche simultanément du côté gauche (respectivement droit) pour obtenir le virage souhaité sans déraper ni basculer.

A haute vitesse (typiquement pour une vitesse supérieure à 30 km/h), à l'inverse, du fait de l'effet gyroscopique, la rotation du guidon est d'autant plus difficile à obtenir que la vitesse est élevée et elle produit un effet en apparence paradoxal, qui est exploité dans la technique dite du « contre-braquage ». Le pilote, s'il souhaite tourner vers la gauche tourne brièvement le guidon vers le côté opposé (en l'occurrence vers la droite). L'effet de réaction gyroscopique provoque l'inclinaison du véhicule vers le côté souhaité (en l'occurrence vers la gauche) et donc son inscription en virage.

On notera que l'effet gyroscopique dépend de la vitesse de rotation des roues, et qu'il ne peut donc être exploité qu'à vitesse suffisamment élevée.

Dans le domaine des motocycles, il est connu d'ajouter une deuxième roue à l'avant du véhicule pour accroître sa stabilité, notamment à l'arrêt. L'ajout de la deuxième roue avant, en augmentant la largeur du véhicule, réduit sa faculté à s'incliner par rapport à un plan vertical et donc sa maniabilité. Le pilote doit, pour obtenir une trajectoire sinueuse, anticiper davantage qu'avec un deux roues et exercer un couple au niveau du guidon en général plus important.

Il est connu d'appliquer des couples différents au niveau de chacune des roues d'un motocycle à trois roues pour améliorer sa stabilité.

Ainsi, le document GB2465352 décrit un véhicule à trois roues dont deux roues motrices équipées de moteurs électriques. Chaque moteur est couplé à une suspension de sorte que la garde au sol peut être modifiée par contrôle du couple moteur appliqué indépendamment à chacune des roues. Cet arrangement permet le contrôle de l'inclinaison du véhicule et donc une meilleure stabilité dans les virages. Le calcul des couples à appliquer à chaque instant est effectué à partir des informations données par des capteurs de direction, d'assiette et de lacet.

Le système décrit par GB2465352 nécessite un châssis suspendu spécifique qui complexifie et alourdit le trois-roues. Il améliore la stabilité du véhicule, c'est-à-dire qu'il limite sa tendance au basculement dans les virages mais ne lui permet pas pour autant d'être particulièrement agile sur une route sinueuse.

La notion de direction assistée différentielle est par ailleurs bien connue dans le domaine des véhicules électriques à quatre roues. Par exemple, le document CN108177692 décrit une méthode permettant de contrôler la stabilité d'un véhicule électrique à quatre roues indépendantes. Un calcul de couple différentiel à appliquer aux deux roues avant pour améliorer la stabilité du véhicule peut être effectué à partir d'informations de capteurs de direction, de vitesse et de lacet, par comparaison à des données de référence telles qu'une « carte » de couples idéaux en fonction des informations (vitesse du véhicule, angle guidon) en association avec des préférences de conduite du pilote.

EP 3 421 341 A1 et EP 3 115 241 A2 divulguent des procédés de contrôle dynamique de véhicules à trois roues.

Toutefois, il a été montré plus haut que la dynamique des véhicules de type motocycle n'est pas la même que celle des véhicules à quatre roues, pour lesquels le contrôle de la stabilité et de l'inscription dans les courbes est moins délicat.

La « carte » de couples idéaux serait notamment insuffisante pour décrire le point de fonctionnement idéal du véhicule à trois roues du fait de la possibilité de basculement d'un véhicule trois roues en virage.

L'invention vise ainsi à proposer un procédé d'assistance au virage pour des véhicules de type motocycle à trois roues, dont deux roues avant équipées de moteurs électriques contrôlés de manière différentielle.

# EP 4 247 678 B1

## RESUME DE L'INVENTION

Ainsi, l'invention se rapporte à un procédé d'assistance au virage d'un véhicule roulant motorisé comprenant exactement trois roues dont deux roues directrices dirigées au moyen d'un guidon et une roue non directrice, un moteur thermique ou électrique dit principal pouvant fournir une puissance motrice à la roue non directrice, deux moteurs électriques dits secondaires, chacun connecté à l'une des deux roues directrices, des moyens d'alimentation contrôlée des moteurs recevant des signaux de contrôle, un processeur recevant des signaux indicatifs d'une position du guidon, d'une vitesse linéaire instantanée du véhicule, d'un couple appliqué sur le guidon par le pilote du véhicule et d'un couple moteur total demandé par le pilote du véhicule, et produisant des signaux de contrôle des moyens d'alimentation contrôlée des moteurs, et des moyens de transmission de ces signaux de contrôle aux moyens d'alimentation. Dans ce procédé, les étapes suivantes sont effectuées au niveau du processeur :

- calcul d'un couple à fournir par le moteur principal et d'un couple à fournir par l'ensemble des moteurs secondaires de sorte que la somme des couples à fournir est égale au couple moteur total demandé par le pilote du véhicule,
- calcul d'un couple différentiel total à partir des signaux indicatifs d'une vitesse linéaire instantanée du véhicule, du couple appliqué sur le guidon par le pilote du véhicule et d'une position du guidon,
- calcul des couples moteurs à fournir par chacun des deux moteurs électriques à partir du couple à fournir par l'ensemble des deux moteurs électriques et du couple différentiel total,
- génération et transmission aux moyens de contrôle de l'alimentation des moteurs des signaux de contrôle nécessaires pour que les couples moteurs calculés soient fournis par les moteurs électriques secondaires.

Grâce à ces dispositions, il est possible de contrôler de manière différentielle le couple moteur fourni à chacune des deux roues directrices et d'obtenir, le cas échéant, un effet d'assistance au virage pour le pilote du véhicule de type motocycle à trois roues dont on sait que la stabilité est améliorée par la troisième roue au détriment de la maniabilité.

Selon l'invention, le procédé d'assistance au virage peut être mis en oeuvre de sorte qu'en situation de virage, le couple moteur fourni par le moteur secondaire de la roue directrice extérieure au virage est différent du couple moteur fourni par le moteur secondaire de la roue directrice intérieure au virage.

Selon l'invention, le procédé d'assistance au virage comprend la comparaison d'une vitesse linéaire instantanée du véhicule à une vitesse seuil v1. Si la vitesse linéaire instantanée du véhicule est inférieure à la vitesse seuil v1, le couple moteur fourni par le moteur secondaire de la roue directrice extérieure au virage est supérieur (respectivement inférieur) au couple moteur fourni par le moteur secondaire de la roue directrice intérieure au virage si le véhicule est en phase d'accélération (respectivement décélération), et/ou, si la vitesse linéaire instantanée du véhicule est supérieure à la vitesse seuil v1, le couple moteur fourni par le moteur secondaire de la roue directrice extérieure au virage est inférieur (respectivement supérieur) au couple moteur fourni par le moteur secondaire de la roue directrice intérieure au virage si le véhicule est en phase d'accélération (respectivement décélération).

Selon un mode réalisation, le couple différentiel total calculé lors de la mise en oeuvre du procédé d'assistance au virage est la somme de deux termes tels que :

- le premier terme du couple différentiel total est calculé à partir des signaux indicatifs de la position du guidon et de la vitesse linéaire instantanée du véhicule,
- le second terme dudit couple différentiel total est calculé à partir des signaux indicatifs de la vitesse linéaire instantanée du véhicule et du couple appliqué par le pilote suivant l'axe du guidon, de sorte que ce second terme du couple différentiel total soit proportionnel au couple appliqué par le pilote suivant l'axe du guidon.

Selon un mode de réalisation, le processeur est configuré pour générer un signal d'entrée en virage et/ou un signal de sortie de virage.

Selon un mode de réalisation, le couple différentiel total calculé est appliqué en réponse au signal d'entrée en virage

Selon un mode de réalisation, le premier terme de couple différentiel calculé est progressivement diminué jusqu'à annulation.

Selon un mode de réalisation, le deuxième terme calculé est remplacé par son opposé en réponse au signal de sortie de virage.

Selon un mode de réalisation, le signal d'entrée en virage est généré par le processeur en réponse à une augmentation en valeur absolue du couple appliqué sur le guidon par le pilote du véhicule.

Selon un mode de réalisation, le véhicule comprend en outre une centrale inertielle transmettant des signaux indicatifs du tangage, du roulis et du lacet du véhicule au processeur et le signal de sortie de virage est généré par le processeur à partir d'au moins un des signaux indicatifs du tangage ou du roulis ou du lacet et du signal indicatif de la position du guidon.

Selon un mode réalisation, le couple différentiel total calculé est limité par une borne supérieure.

Selon un mode réalisation, les moteurs électriques secondaires peuvent fonctionner en récepteur de manière à recharger une batterie.

Selon un mode réalisation, les couples moteurs fournis par les moteurs principal et secondaires sont calculés pour optimiser la consommation d'énergie thermique et/ou électrique du véhicule.

L'invention concerne aussi un programme d'ordinateur comprenant des instructions de code de programme pour l'exécution des étapes du procédé selon l'un des modes de réalisation décrits précédemment lorsque ledit programme est exécuté sur un ordinateur.

L'invention concerne en outre un véhicule roulant motorisé selon la revendication 11.

## BREVE DESCRIPTION DES DESSINS

Des modes de réalisation de l'invention seront décrits ci-dessous par référence aux dessins, décrits brièvement ci-dessous :

La figure 1 représente une vue de dessus d'un véhicule à trois roues en mouvement de translation rectiligne uniforme sur lequel la méthode d'assistance au virage peut être mise en oeuvre.

La figure 2 représente une vue de dessus du même véhicule à trois roues en phase de virage à gauche à basse vitesse et avec accélération, avec les forces motrices obtenues au niveau des roues grâce aux trois moteurs.

La figure 3 représente une vue de dessus du même véhicule à trois roues en phase de virage à gauche à vitesse élevée et avec décélération, avec les forces motrices obtenues au niveau des roues grâce aux trois moteurs.

La figure 4 représente une vue de dessus du même véhicule à trois roues en phase de virage à gauche à vitesse élevée et avec accélération, avec les forces motrices obtenues au niveau des roues grâce aux trois moteurs.

La figure 5 représente sur une vue de côté les axes de référence par rapport auxquels sont définis les angles de roulis, tangage et lacet.

La figure 6 représente sur une vue schématique des différents organes impliqués dans la méthode d'assistance au virage.

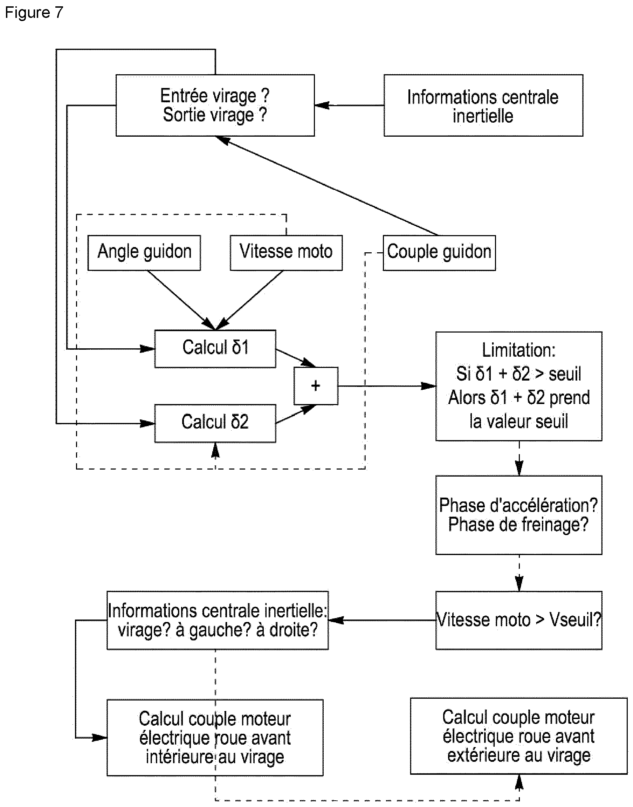

La figure 7 représente une vue schématique plus détaillée de l'algorithme de calcul des couples moteurs appliqués sur les roues avant.

Sur les dessins, des références identiques désignent des objets identiques ou similaires.

## DESCRIPTION DETAILLEE

Le procédé d'assistance au virage décrit ici est destiné à être mis en oeuvre sur un processeur équipant un véhicule motorisé de type véhicule à trois roues.

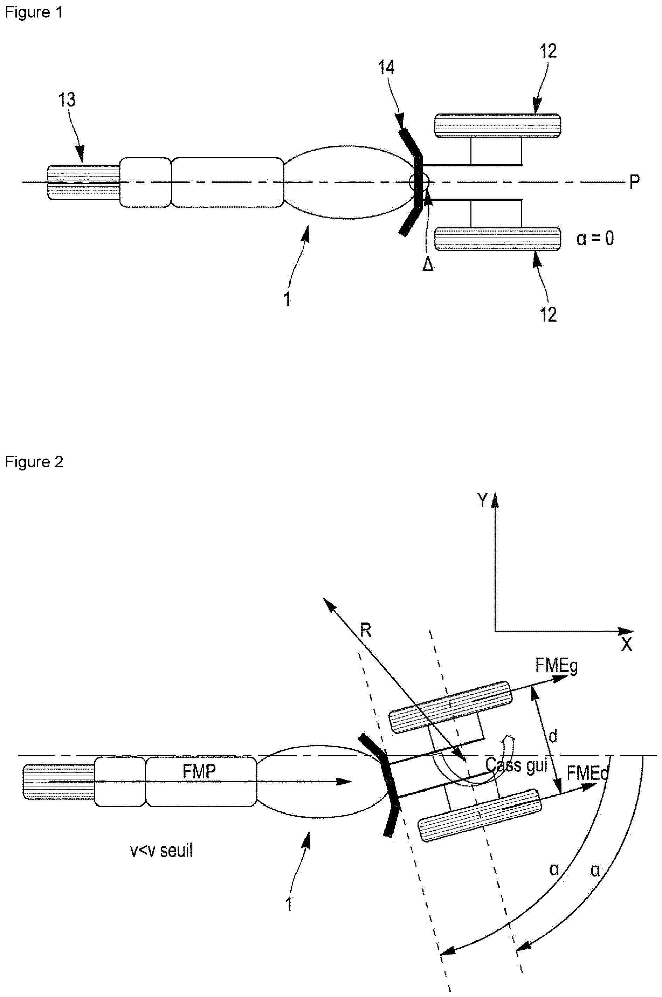

Selon un mode de réalisation, et en référence à la figure 1, le véhicule 11 est un motocycle équipé de trois roues. Il comprend deux roues directrices 12 à l'avant et une roue non directrice 13 à l'arrière. Il est approximativement symétrique par rapport à un plan de symétrie P, vertical lorsque le véhicule a un mouvement de translation rectiligne uniforme. Notamment dans cette situation, les deux roues avant sont symétriques par rapport au plan de symétrie P et la roue arrière dans ce plan de symétrie, de sorte que les appuis au sol des trois roues forment un triangle isocèle.

Le train avant peut avoir une structure en parallélogramme déformable ou indéformable.

L'essentiel de la puissance motrice est fourni à la roue arrière par un moteur dit « principal », qui peut être un moteur thermique ou électrique.

Chacune des roues avant est en outre équipée d'un moteur électrique interne, dit moteur électrique « secondaire », de puissance suffisante pour obtenir l'effet d'assistance au virage souhaité décrite plus loin.

Les moteurs électriques secondaires sont par exemple des moteurs-roues, c'est-à-dire des moteurs d'encombrement réduit, intégrés à une roue donc ne nécessitant pas de système de transmission.

Le niveau d'hybridation peut être ajusté librement.

Par exemple, pour un véhicule conçu sur le principe de l'hybridation « légère » (« mild hybrid » en anglais), les deux moteurs électriques peuvent avoir une puissance de l'ordre de 10 kW à 20 kW, quelle que soit la puissance du moteur thermique.

Pour un véhicule totalement hybride (« full hybride » en anglais), les puissances des moteurs électriques et thermique seront du même ordre de grandeur.

L'alimentation des moteurs électriques est assurée par une batterie. La conversion du courant continu en courant alternatif nécessaire pour l'alimentation de chacun des moteurs électriques est réalisée au moyen d'un dispositif d'électronique de puissance approprié, par exemple un onduleur.

Le véhicule comporte un processeur.

Ce processeur est par exemple un calculateur moteur (« Engine Control Unit » ou « ECU » en anglais), encore appelé superviseur, qui assure la gestion de l'énergie et sa répartition entre les trois moteurs, en fonction des informations remontées par les différents capteurs qui constituent les périphériques d'entrée de l'ECU.

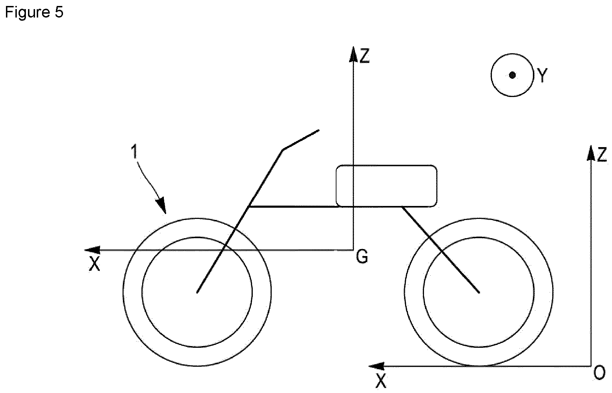

Un diagramme représentant les interactions du processeur avec les différents composants du véhicule dans un mode de réalisation particulier est représenté sur la figure 5.

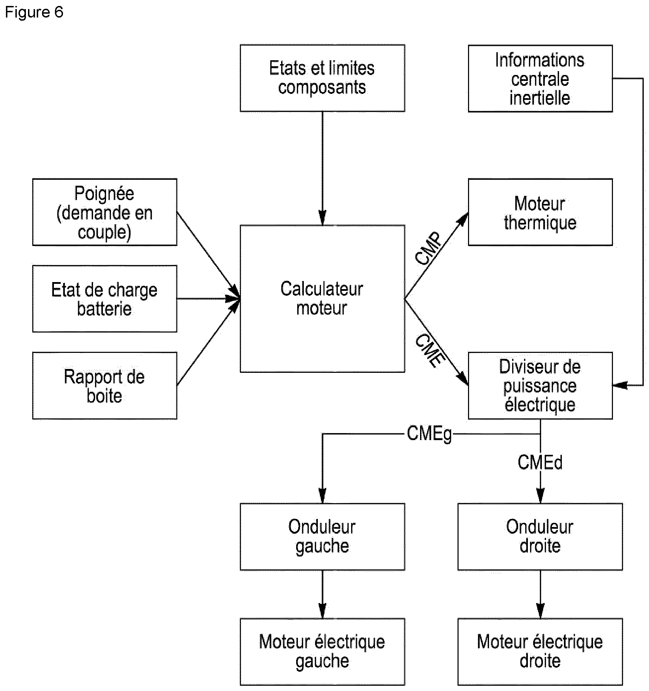

Un mode de réalisation particulier de l'algorithme mis en œuvre sur le processeur pour obtenir l'assistance au virage est représenté sur la figure 6.

La position de l'axe de rotation des roues avant par rapport au plan P, repérée par l'angle $\alpha$ (en référence à la figure 2), est contrôlée par le pilote du véhicule au moyen d'un guidon 14. Un capteur d'angle guidon, appelé encore angle de braquage, permet d'obtenir un signal analogique ou numérique décrivant cette position. Le capteur d'angle guidon est l'un des périphériques d'entrée du processeur.

Un capteur de position de la poignée d'accélération ou « poignée des gaz » fournit au processeur le couple total demandé par le pilote.

Le véhicule est en outre équipé au moins d'un capteur de vitesse, d'un capteur de l'état de charge de la batterie, d'un capteur de rapport de boîte de vitesses, et d'un capteur de couple guidon appliqué par le pilote pour modifier l'angle guidon $\alpha$ par rapport à son axe de rotation (axe $\Delta$ sur la figure 1).

Le capteur de vitesse permet notamment de mesurer la vitesse linéaire instantanée du véhicule (autrement dit la vitesse instantanée de déplacement du véhicule dans le plan de la route). Les signaux mesurés par le capteur de vitesse peuvent être transmis au processeur et utilisés par celui-ci pour obtenir des signaux indicatifs de l'accélération linéaire instantanée.

Enfin, le véhicule est muni d'une centrale inertielle qui permet de mesurer les angles de roulis, lacet et tangage (ou angle de cabrage du véhicule) et leurs dérivées temporelles. Les angles de roulis, lacet et tangage sont les angles de Cardan intervenant dans la matrice de passage du référentiel lié au sol de repère (OXYZ) au référentiel lié au châssis du véhicule. Si G est le centre de gravité de la masse suspendue, en référence à la figure 5, les angles de lacet, roulis et tangage décrivent respectivement le mouvement de rotation du châssis par rapport à l'axe « bas-haut » (GZ), par rapport à l'axe longitudinal (GX) et par rapport à l'axe (GY) orthogonal au plan (GXZ). La centrale inertielle permet optionnellement de mesurer la vitesse linéaire instantanée du véhicule (autrement dit la vitesse instantanée de déplacement du véhicule dans le plan de la route) et l'accélération linéaire instantanée du véhicule par rapport au référentiel terrestre.

Le véhicule intègre les moyens nécessaires (en termes d'électronique et de communication avec le calculateur moteur, entre autres) pour maintenir ses composants dans leur gamme de fonctionnement nominal.

Le processeur est caractérisé par sa période T. Aux dates nT (n entier), il reçoit les informations de ses différents périphériques d'entrée et génère en réaction des signaux de sortie.

Ces informations d'entrée sont en premier lieu utilisées pour déterminer le couple total Cdem à fournir par l'ensemble des trois moteurs. Ce couple est réparti entre le moteur « principal », qui reçoit l'information du couple CMP qu'il doit fournir, et l'ensemble des deux moteurs électriques « secondaires », qui devront fournir à eux deux un couple CME de sorte que Cdem = CMP + CME.

Une deuxième loi peut être prévue pour permettre la détermination univoque de CMP et CME. Cette loi peut par exemple être définie pour optimiser la consommation énergétique du moteur thermique, ou des moteurs électriques, ou de l'ensemble des trois moteurs.

Les moteurs électriques « secondaires » sont réversibles. Ils peuvent fournir une puissance mécanique aux roues de sorte que CME > 0 ; tourner à vide, de sorte que CME = 0 ; ou encore fonctionner en mode régénératif de sorte que CME < 0 : le moteur fonctionne alors en récepteur et la puissance reçue peut être utilisée pour recharger la batterie.

En phase de freinage, il est possible d'exploiter le frein moteur du moteur thermique et/ou des moteurs électriques. Un complément de frein mécanique et/ou hydraulique peut être ajouté.

Deux modes principaux sont possibles :

Le premier mode est dit « électrique roues». Dans ce cas, le couple total Cdem est faible, le moteur principal est arrêté et la boîte de vitesse est au point mort: Cdem = CME et CMP = 0.

Pour un couple total Cdem élevé, le second mode est dit « boost ». Les trois moteurs fournissent simultanément une puissance mécanique aux roues : Cdem = CMP + CME avec CME > 0.

Dans le cas où le moteur principal est un moteur thermique, un troisième mode dit « régénératif » peut être défini. Dans ce cas, le couple total Cdem est intermédiaire et la batterie peut alors être rechargée : Cdem = CMP + CME avec CME < 0, quel que soit le signe de Cdem. Ce mode est notamment activé quand la batterie doit être rechargée.

Le couple CME calculé est transmis par le calculateur moteur à un module de division de puissance électrique, qui détermine le couple moteur à fournir au niveau de l'axe de chacune des roues et transmet l'information correspondante à chacun des moteurs électriques « secondaires ». Un couple CMEg (respectivement CMEd) est alors fourni par le moteur électrique « secondaire » gauche (respectivement droite) de sorte que CME = CMEg + CMEd.

En ligne droite, que ce soit en phase d'accélération (CME >0) ou de freinage (CME<0), les deux moteurs électriques « secondaires » sont commandés de manière symétrique :

$$CMEg = CMEd = \frac{CME}{2}$$

En situation de virage, le but du procédé décrit ici est de permettre l'application de couples CMEg et CMEd différents.

En effet, si les couples moteurs appliqués aux deux roues sont les mêmes, les actions induites au niveau des points de contacts des roues au sol ont la même résultante et des couples de signes opposés par rapport à l'axe de rotation du guidon. Et du fait de la présence des deux roues, la rotation du guidon est plus difficile à obtenir que pour un deux roues donc la maniabilité du véhicule trois roues est réduite par rapport à celle d'un deux roues.

En revanche, si ces couples moteurs sont différents, le couple résultant par rapport à l'axe du guidon est non nul. Le pilote ressent donc une assistance à la rotation du guidon. Cette disposition permet donc d'améliorer la maniabilité du véhicule.

Le processeur du module de division de puissance électrique évalue deux termes de couple différentiel $\delta 1$ et $\delta 2$, permettant d'induire en entrée et en sortie de virage une dissymétrie entre les couples moteurs des deux roues avant.

Le premier terme de couple différentiel, noté $\delta 1$, est évalué sur la base des informations vitesse de la moto et angle guidon, mesuré par l'intermédiaire du capteur d'angle guidon. Ces informations sont utilisées par le processeur du module de division de puissance électrique pour calculer le rayon de courbure R de la trajectoire du véhicule. Le terme $\delta 1$ est alors évalué suivant la formule :

$$\delta 1 = CMEmoy \times \left( \frac{R + d}{R + \frac{d}{2}} - \frac{R}{R + \frac{d}{2}} \right) = CMEmoy \times \frac{d}{R + \frac{d}{2}}$$

où le couple moyen CMEmoy est défini comme la moyenne des couples CMEg et CMEd :

$$CMEmoy = \frac{CMEg + CMEd}{2} = \frac{CME}{2}$$

et où d est la distance entre les points de contact des deux roues avant avec le sol.

Dans le cas où le train avant est à parallélogramme déformable, la variation de d peut être prise en compte et calculée à partir de lois géométriques connues et des informations de la centrale inertielle.

Dans la mesure où en général cette distance varie peu, elle peut être traitée comme une constante dans l'algorithme mis en jeu.

Le second terme de couple différentiel, noté $\delta 2$, est évalué sur la base des informations vitesse de la moto et couple guidon Cguid exercé par le pilote pour s'inscrire dans le virage, mesuré par l'intermédiaire du capteur de couple guidon. Le terme $\delta 2$ est évalué par le processeur du module de division de puissance électrique suivant la formule :

$$\delta 2 = k \times Cguid \text{ , où } k$$

dépend de la distance d entre les deux roues,

dépend de la vitesse de la moto,

et est positive.

Un couple différentiel total, $\delta tot$, défini comme la somme des deux termes de couple différentiel $\delta 1$ et $\delta 2$, est alors calculé.

A basse vitesse, le pilote tourne le guidon du côté vers lequel il souhaite que la moto tourne. Dans le cas où la roue gauche est la roue située dans l'intérieur de la courbe décrite par le véhicule, les couples CMEg et CMEd sont calculés de la façon suivante :

$$CMEg = CMEmoy - \delta tot = CMEmoy - \delta 1 - \delta 2$$

$$CMEd = CMEmoy + \delta tot = CMEmoy + \delta 1 + \delta 2$$

La norme de la force motrice FMEd exercée par le sol sur la roue avant à l'extérieur de la courbe, en l'occurrence la roue avant droite, est alors supérieure à la norme de la force motrice FMEg exercée par le sol sur la roue à l'intérieur de la courbe, en l'occurrence la roue avant gauche. Si on note r le rayon des roues,

$$FMEg = \frac{CMEg}{r}$$

$$FMEd = \frac{CMEd}{r} > FMEg$$

Cet ensemble de forces se traduit par un couple Cass.guid. d'assistance à la rotation du guidon dans le sens souhaité. Cette situation est représentée sur la figure 2.

Si le véhicule est en phase d'accélération dans le virage, les forces motrices FMEd et FMEg s'exercent dans le sens du déplacement. Cette situation peut être visualisée sur la figure 2.

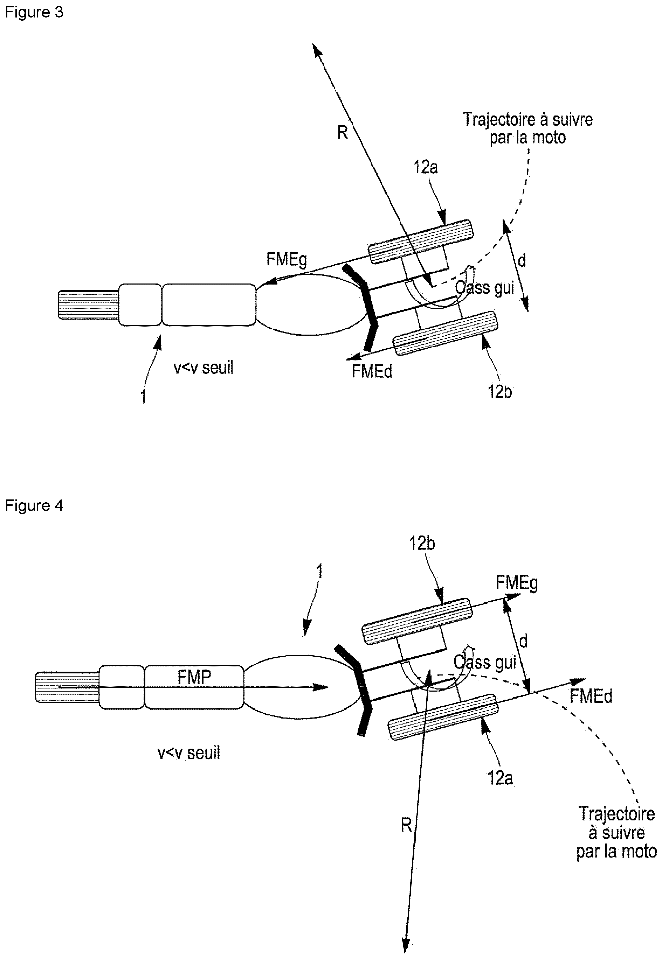

Si le véhicule est en phase de freinage dans le virage, l'action des moteurs électriques s'ils étaient seuls se traduiraient par des forces motrices FMEd et FMEg s'exercent dans le sens inverse du déplacement. Cette situation peut être visualisée, dans le cas d'un freinage en virage à gauche, sur la figure 3. Autrement dit, en phase de freinage, les moteurs électriques « secondaires » se comportent comme des récepteurs, une énergie plus élevée étant dans ce cas reçue par le moteur gauche que par le moteur droit. L'énergie récupérée est utilisée pour recharger la batterie.

On obtiendra aisément les équations pour un virage à droite en échangeant les rôles joués par les deux roues.

A haute vitesse, le pilote exploite au contraire la technique dite du « contre-braquage » ou « braquage inverse », rendue possible par le fait qu'à haute vitesse, les effets gyroscopiques sont sensibles. Dans ce cas, tourner le guidon d'un côté entraîne par l'effet de réaction gyroscopique l'inclinaison du véhicule de l'autre côté. Pour tourner à droite à haute vitesse, il faut donc, juste avant l'entrée du virage, tourner le guidon du côté opposé, c'est-à-dire vers la gauche. L'assistance à la direction sera réelle si les moteurs électriques permettent d'obtenir une force motrice sur la roue avant à l'intérieur de la courbe supérieure à celle qui s'exerce sur la roue avant à l'extérieur de la courbe. Cette situation est représentée sur la figure 4.

Dans le cas où l'on souhaite tourner à droite à vitesse élevée, la roue gauche est la roue située dans l'intérieur de la courbe décrite par le véhicule, les couples CMEg et CMEd sont calculés de la façon suivante :

$$CMEd = CMEmoy + \delta tot = CMEmoy + \delta 1 + \delta 2$$

$$CMEg = CMEmoy - \delta tot = CMEmoy - \delta 1 - \delta 2$$

La force motrice FMEg exercée par le sol sur la roue avant à l'extérieur de la courbe, en l'occurrence la roue avant gauche, est alors inférieure à la force motrice FMEd exercée par le sol sur la roue à l'intérieur de la courbe, en l'occurrence la roue avant droite :

$$FMEg = \frac{CMEg}{r}$$

$$FMEd = \frac{CMEd}{r} < FMEg$$

Cet ensemble de forces se traduit à nouveau par un couple Cass.guid. d'assistance à la rotation du guidon dans le sens souhaité.

Cette situation pourra être comprise à l'aide de la figure 4.

Le processeur est configuré pour déterminer si le véhicule doit s'inscrire dans un virage à droite ou un virage à gauche à partir des informations transmises par la centrale inertielle, notamment l'angle de lacet par rapport à l'axe (GZ) de la figure 5.

Le processeur est configuré pour générer un signal d'entrée en virage.

Notamment, l'assistance au virage peut être déclenchée par un signal d'entrée en virage basé sur les informations de roulis, comme l'accélération angulaire par rapport à l'axe (GX) fournie par la centrale inertielle. Cette information est pertinente puisque la cinématique du véhicule décrit ici est analogue à celle d'un deux-roues, c'est-à-dire que, pour s'inscrire dans un virage, le pilote agit pour provoquer l'inclinaison du véhicule.

EP 4 247 678 B1

D'autres informations telles que, par exemple, la comparaison de la variation de la valeur absolue du couple guidon demandé à une valeur seuil, peuvent être mises en jeu dans le signal d'entrée en virage.

Dans un mode de réalisation, une fois le véhicule incliné de manière satisfaisante pour s'inscrire sur la trajectoire souhaitée, le premier terme de couple différentiel $\delta 1$ est progressivement annulé.

Le processeur peut par exemple exploiter au moins une des informations transmises par la centrale inertielle pour comparer l'inclinaison instantanée du véhicule par rapport au plan (OXZ) par rapport à l'inclinaison nécessaire pour s'inscrire dans le virage. Lorsque l'écart entre l'inclinaison réelle et l'inclinaison nécessaire est inférieur à une valeur seuil prédéfinie, le premier terme de couple différentiel est progressivement annulé. En d'autres terme, la situation est considérée comme une situation de virage établi lorsque l'angle de roulis peut être considéré comme approximativement constant et non nul.

Dans un mode de réalisation, en sortie de virage, le terme $\delta 1$ restant nul ou étant annulé s'il n'est pas déjà nul, le second terme de couple différentiel $\delta 2$ est remplacé par son opposé, de manière à exploiter à nouveau l'effet de réaction gyroscopique pour obtenir le redressement du véhicule en vue d'une trajectoire à nouveau rectiligne.

Notamment, le processeur peut exploiter un signal de sortie de virage basé sur l'accélération angulaire par rapport à l'axe (GX) fournie par la centrale inertielle. Cette information est pertinente puisque la cinématique du véhicule décrit ici est analogue à celle d'un deux-roues, c'est-à-dire que l'inclinaison du véhicule, c'est-à-dire l'angle de roulis, diminue du fait des actions du pilote en sortie d'un virage.

D'autres informations telle que par exemple la comparaison de la variation de la valeur absolue du couple guidon demandé à une valeur seuil, peuvent être mises en jeu dans le signal d'entrée en virage.

Notamment, le processeur peut exploiter au moins une des informations transmises par la centrale inertielle pour déterminer si le véhicule est en sortie de virage. La sortie de virage peut aussi être définie par rapport à un changement de signe du couple guidon demandé par rapport au couple guidon demandé qui a déclenché l'entrée en virage.

Le processeur du module de division de puissance électrique transmet les informations CMEg et CMEd aux onduleurs contrôlant l'alimentation des moteurs électriques « secondaires », après limitation de la dissymétrie $\delta 1 + \delta 2$ par une valeur seuil $\delta$seuil. Ce seuil est fixé de manière à ce que la stabilité du véhicule reste satisfaisante en virage.

Ce procédé pourra être adapté sans difficulté au cas d'un véhicule pour lesquelles les deux roues directrices sont placées à l'arrière du véhicule et la roue non directrice à l'avant.

**LISTE DES SIGNES DE REFERENCE**

1 : véhicule à trois roues

12 : roues directrices avant

12a : roue directrice intérieure au virage

12b : roue directrice extérieure au virage

13 . roue non directrice arrière

14 : guidon

**Revendications**

1. Procédé d'assistance au virage d'un véhicule roulant motorisé (1) comprenant :

    - exactement trois roues dont deux roues directrices (12) dirigées au moyen d'un guidon (14) et une roue non directrice (13)
    - un moteur thermique ou électrique principal pouvant fournir une puissance motrice à la roue non directrice (13),
    - deux moteurs électriques dits moteurs électriques secondaires, chacun connecté à l'une des deux roues directrices (12),
    - des moyens d'alimentation contrôlée des moteurs recevant des signaux de contrôle,
    - un processeur recevant des signaux indicatifs d'une position du guidon (14), d'une vitesse linéaire instantanée du véhicule (1), d'un couple appliqué sur le guidon par le pilote du véhicule (1) et d'un couple moteur total demandé par le pilote du véhicule (1), et produisant les signaux de contrôle reçus par les moyens d'alimentation contrôlée des moteurs,
- des moyens de transmission des signaux de contrôle aux moyens d'alimentation,
dans lequel les étapes suivantes sont effectuées au niveau du processeur:

- calcul d'un couple à fournir par le moteur principal et d'un couple à fournir par l'ensemble des moteurs secondaires de sorte que la somme des couples à fournir est égale au couple moteur total demandé par le pilote du véhicule (1),
- calcul d'un couple différentiel total à partir des signaux indicatifs d'une vitesse linéaire instantanée du véhicule (1), du couple appliqué sur le guidon (14) par le pilote du véhicule et d'une position du guidon (14),
- calcul des couples moteurs à fournir par chacun des deux moteurs électriques à partir du couple à fournir par l'ensemble des deux moteurs électriques et du couple différentiel total,
- génération et transmission aux moyens de contrôle de l'alimentation des moteurs des signaux de contrôle nécessaires pour que les couples moteurs calculés soient fournis par les moteurs électriques secondaires ;

**caractérisé en ce qu'**en situation de virage le couple moteur fourni par le moteur secondaire de la roue directrice extérieure au virage (12 b) est différent du couple moteur fourni par le moteur secondaire de la roue directrice intérieure au virage (12 a), et **en ce que**

- si la vitesse linéaire instantanée du véhicule est inférieure à une vitesse seuil v1, le couple moteur fourni par le moteur secondaire de la roue directrice extérieure au virage (12b) est supérieur, respectivement inférieur, au couple moteur fourni par le moteur secondaire de la roue directrice intérieure au virage (12a) si le véhicule est en phase d'accélération, respectivement en phase de décélération ; et/ou
- si la vitesse linéaire instantanée du véhicule (1) est supérieure à une vitesse seuil v1, le couple moteur fourni par le moteur secondaire de la roue directrice extérieure au virage (12b) est inférieur, respectivement supérieur, au couple moteur fourni par le moteur secondaire de la roue directrice intérieure au virage (12a) si le véhicule (1) est en phase d'accélération, respectivement en phase de décélération.

2. Procédé d'assistance au virage selon la revendication 1 **caractérisé en ce que** le couple différentiel total calculé est la somme de deux termes :

- le premier terme du couple différentiel total est calculé à partir des signaux indicatifs de la position du guidon (14) et de la vitesse linéaire instantanée du véhicule (1),
- le second terme du couple différentiel total est calculé à partir des signaux indicatifs de la vitesse linéaire instantanée du véhicule (1) et du couple appliqué sur le guidon (14) par le pilote du véhicule, de sorte que ce second terme du couple différentiel total soit proportionnel au couple appliqué par le pilote du véhicule (1) suivant l'axe du guidon (14).

3. Procédé d'assistance au virage selon l'une quelconque des revendications 1 à 2 **caractérisé en ce que** le processeur est configuré pour générer un signal d'entrée en virage et/ou un signal de sortie de virage.

4. Procédé d'assistance au virage selon la revendication 3 **caractérisé en ce qu'**il comprend au moins l'une des étapes suivantes :

a) le couple différentiel total calculé est appliqué en réponse au signal d'entrée en virage,
b) le premier terme de couple différentiel calculé est progressivement diminué jusqu'à annulation,
c) le deuxième terme calculé est remplacé par son opposé en réponse au signal de sortie de virage.

5. Procédé d'assistance au virage selon la revendication 4 **caractérisé en ce que** le signal d'entrée en virage est généré par le processeur en réponse à une augmentation en valeur absolue du couple appliqué sur le guidon (14) par le pilote du véhicule.

6. Procédé d'assistance au virage selon l'une quelconque des revendications 3 à 5 **caractérisé en ce que** le véhicule (1) comprend en outre une centrale inertielle transmettant des signaux indicatifs du tangage, du roulis et du lacet du véhicule (1) au processeur et que le signal de sortie de virage est généré par le processeur à partir d'au moins un des signaux indicatifs du tangage ou du roulis ou du lacet et du signal indicatif de la position du guidon (14).

7. Procédé d'assistance au virage selon l'une quelconque des revendications 1 à 6 **caractérisé en ce que** le couple différentiel total calculé est limité par une borne supérieure.

8. Procédé d'assistance au virage selon l'une quelconque des revendications 1 à 7 **caractérisé en ce que** les moteurs électriques secondaires peuvent fonctionner en récepteurs de manière à recharger une batterie.

9. Procédé d'assistance au virage selon l'une quelconque des revendications 1 à 8 **caractérisé en ce que** les couples moteurs fournis par les moteurs principal et secondaires sont en outre calculés pour optimiser la consommation d'énergie thermique et/ou électrique du véhicule (1).

10. Programme d'ordinateur comprenant des instructions de code de programme pour l'exécution des étapes du procédé selon l'une des revendications 1 à 9 lorsque le programme est exécuté sur un ordinateur.

11. Véhicule roulant motorisé (1) comprenant :

- exactement trois roues dont deux roues directrices (12) dirigées au moyen d'un guidon (14) et une roue non directrice (13),
- un moteur thermique ou électrique principal pouvant fournir une puissance motrice à la roue non directrice (13),
- deux moteurs électriques dits moteurs électriques secondaires, chacun connecté à l'une des deux roues directrices (12),
- des moyens d'alimentation contrôlée des moteurs recevant des signaux de contrôle,
- un processeur recevant les signaux indicatifs d'une position du guidon (14), d'une vitesse linéaire instantanée du véhicule (1), du couple appliqué sur le guidon par le pilote et du couple moteur total demandé par le pilote et produisant les signaux de contrôle des moyens d'alimentation contrôlée des moteurs,
- des moyens de transmission des signaux de contrôle aux moyens d'alimentation, dans lequel le processeur est adapté pour effectuer les étapes suivantes :

- calcul d'un couple à fournir par le moteur principal et d'un couple à fournir par l'ensemble des moteurs secondaires de sorte que la somme des couples à fournir est égale au couple moteur total demandé par le pilote du véhicule (1),
- calcul d'un couple différentiel total à partir des signaux indicatifs d'une vitesse linéaire instantanée du véhicule (1), du couple appliqué sur le guidon (14) par le pilote du véhicule (1) et d'une position du guidon (14),
- calcul des couples moteurs à fournir par chacun des deux moteurs électriques à partir du couple à fournir par l'ensemble des deux moteurs électriques et du couple différentiel total,
- génération et transmission aux moyens de contrôle de l'alimentation des moteurs des signaux de contrôle nécessaires pour obtenir les couples moteurs calculés au niveau des moteurs électriques secondaires ; **caractérisé en ce qu'**en situation de virage le couple moteur fourni par le moteur secondaire de la roue directrice extérieure au virage (12 b) est différent du couple moteur fourni par le moteur secondaire de la roue directrice intérieure au virage (12 a), et **en ce que**
- si la vitesse linéaire instantanée du véhicule est inférieure à une vitesse seuil v1, le couple moteur fourni par le moteur secondaire de la roue directrice extérieure au virage (12b) est supérieur, respectivement inférieur, au couple moteur fourni par le moteur secondaire de la roue directrice intérieure au virage (12a) si le véhicule est en phase d'accélération, respectivement en phase de décélération ; et/ou
- si la vitesse linéaire instantanée du véhicule (1) est supérieure à une vitesse seuil v1, le couple moteur fourni par le moteur secondaire de la roue directrice extérieure au virage (12b) est inférieur, respectivement supérieur, au couple moteur fourni par le moteur secondaire de la roue directrice intérieure au virage (12a) si le véhicule (1) est en phase d'accélération, respectivement en phase de décélération..

**Patentansprüche**

1. Verfahren zur Kurvenunterstützung eines motorisierten Fahrzeugs (1), umfassend:

- genau drei Räder, davon zwei lenkbare Räder (12), die mittels eines Lenkers (14) gelenkt werden, und ein nichtlenkbares Rad (13)
- ein thermischer oder elektrischer Hauptmotor, der Antriebsleistung an das nichtlenkbare Rad (13) liefern kann,
- zwei sogenannte sekundäre Elektromotoren, jeweils an eines der beiden lenkbaren Räder (12) angeschlossen,
- Mittel zur geregelten Energieversorgung der Motoren, die Steuersignale empfangen,
- ein Prozessor, der indikative Signale über die Position des Lenkers (14), über die momentane lineare Geschwindigkeit des Fahrzeugs (1), über ein vom Fahrer des Fahrzeugs (1) am Lenker (14) angelegtes Drehmoment und über ein vom Fahrer des Fahrzeugs (1) gefordertes gesamtes Motordrehmoment empfängt und die Steuersignale erzeugt, die von den Mitteln zur geregelten Energieversorgung der Motoren empfangen werden,
- Mittel zur Übertragung der Steuersignale an die Energieversorgungsmittel,
wobei folgende Schritte auf Ebene des Prozessors durchgeführt werden:

- Berechnung eines vom Hauptmotor zu liefernden Drehmoments und eines vom Gesamtsatz der sekundären Elektromotoren zu liefernden Drehmoments, so dass die Summe der zu liefernden Drehmomente dem vom Fahrer des Fahrzeugs (1) geforderten gesamten Motordrehmoment entspricht,
- Berechnung eines Gesamtdifferenzmoments aus den indikativen Signalen über die momentane lineare Geschwindigkeit des Fahrzeugs (1), über das vom Fahrer am Lenker (14) angelegte Drehmoment und über die Position des Lenkers (14),
- Berechnung der von jedem der beiden Elektromotoren zu liefernden Motordrehmomente aus dem vom Gesamtsatz der sekundären Elektromotoren zu liefernden Drehmoment und dem Gesamtdifferenzmoment,
- Erzeugung und Übermittlung an die Mittel zur geregelten Energieversorgung der Motoren der Steuerungssignale, die erforderlich sind, damit die berechneten Motordrehmomente von den sekundären Elektromotoren bereitgestellt werden;

**gekennzeichnet dadurch, dass** in einer Kurvensituation das vom sekundären Elektromotor des außen in der Kurve liegenden lenkbaren Rads (12 b) abgegebene Motordrehmoment sich von dem vom sekundären Elektromotor des innen in der Kurve liegenden lenkbaren Rads (12 a) abgegebenen Motordrehmoment unterscheidet, und dadurch, dass

- wenn die momentane lineare Geschwindigkeit des Fahrzeugs unter der Schwellengeschwindigkeit v1 liegt, ist das vom sekundären Elektromotor des außen in der Kurve liegenden lenkbaren Rads (12b) abgegebene Motordrehmoment größer bzw. kleiner als das vom sekundären Elektromotor des innen in der Kurve liegenden lenkbaren Rads (12a) abgegebene Motordrehmoment, wenn das Fahrzeug in der Beschleunigungsphase bzw. in der Verzögerungsphase ist; und/oder
- wenn die momentane lineare Geschwindigkeit des Fahrzeugs (1) über der Schwellengeschwindigkeit v1 liegt, ist das vom sekundären Elektromotor des außen in der Kurve liegenden lenkbaren Rads (12b) abgegebene Motordrehmoment geringer bzw. größer als das vom sekundären Elektromotor des innen in der Kurve liegenden lenkbaren Rads (12a) abgegebene Motordrehmoment, wenn das Fahrzeug (1) in der Beschleunigungsphase bzw. in der Verzögerungsphase ist.

2. Verfahren zur Kurvenunterstützung gemäß Anspruch 1, **dadurch gekennzeichnet, dass** das berechnete Gesamtdifferenzmoment die Summe von zwei Termen ist

- der erste Term des Gesamtdifferenzmoments wird aus den indikativen Signalen der Position des Lenkers (14) und der momentanen linearen Geschwindigkeit des Fahrzeugs (1) berechnet,
- der zweite Term des Gesamtdifferenzmoments wird aus den indikativen Signalen der momentanen linearen Geschwindigkeit des Fahrzeugs (1) und dem am Lenker (14) vom Fahrer des Fahrzeugs (1) angelegten Drehmoment berechnet, so dass dieser zweite Term des Gesamtdifferenzmoments proportional zu dem vom Fahrer des Fahrzeugs (1) am Lenker (14) entlang der Lenkerachse (14) angelegten Drehmoment ist.

3. Verfahren zur Kurvenunterstützung gemäß einem der Ansprüche 1 bis 2, **dadurch gekennzeichnet, dass** der Prozessor so konfiguriert ist, ein Einlenksignal und/oder ein Ausfahrtsignal zu erzeugen.

4. Verfahren zur Kurvenunterstützung gemäß Anspruch 3, **dadurch gekennzeichnet, dass** es mindestens einen der folgenden Schritte umfasst

a) das berechnete Gesamtdifferenzmoment wird als Reaktion auf das Einlenksignal angewendet,
b) der erste berechnete Term des Differenzmoments wird schrittweise bis auf Null reduziert,
c) der zweite berechnete Term wird als Reaktion auf das Ausfahrtsignal durch sein Gegenteil ersetzt.

5. Verfahren zur Kurvenunterstützung gemäß Anspruch 4, **dadurch gekennzeichnet, dass** das Einlenksignal vom Prozessor als Reaktion auf eine Zunahme des Absolutbetrags des vom Fahrer des Fahrzeugs (1) am Lenker (14) ausgeübten Drehmoments erzeugt wird.

6. Verfahren zur Kurvenunterstützung gemäß einem der Ansprüche 3 bis 5, **dadurch gekennzeichnet, dass** das Fahrzeug (1) ferner eine Trägheitsmesseinheit aufweist, welche dem Prozessor indikative Signale über Nicken, Rollen und Gieren des Fahrzeugs (1) übermittelt, und dass das Ausfahrtsignal vom Prozessor aus zumindest einem der indikativen Signale für Nicken, Rollen oder Gieren sowie dem indikativen Signal der Position des Lenkers (14) erzeugt wird.

7. Verfahren zur Kurvenunterstützung gemäß einem der Ansprüche 1 bis 6, **dadurch gekennzeichnet, dass** das berechnete Gesamtdifferenzmoment durch eine obere Grenze begrenzt ist.

8. Verfahren zur Kurvenunterstützung gemäß einem der Ansprüche 1 bis 7, **dadurch gekennzeichnet, dass** die sekundären Elektromotoren als Generatoren betrieben werden können, um eine Batterie aufzuladen.

9. Verfahren zur Kurvenunterstützung gemäß einem der Ansprüche 1 bis 8, **dadurch gekennzeichnet, dass** die von Hauptmotor und sekundären Elektromotoren bereitgestellten Motordrehmomente ferner so berechnet werden, dass der thermische und/oder elektrische Energieverbrauch des Fahrzeugs (1) optimiert wird.

10. Computerprogramm umfassend Programmcodeanweisungen zur Ausführung der Schritte des Verfahrens gemäß einem der Ansprüche 1 bis 9, wenn das Programm auf einem Computer ausgeführt wird.

11. Motorisiertes Fahrzeug (1), umfassend:

- genau drei Räder, davon zwei lenkbare Räder (12), die mittels eines Lenkers (14) gelenkt werden, und ein nichtlenkbares Rad (13),
- ein thermischer oder elektrischer Hauptmotor, der Antriebsleistung an das nichtlenkbare Rad (13) liefern kann,
- zwei sogenannte sekundäre Elektromotoren, jeweils an eines der beiden lenkbaren Räder (12) angeschlossen,
- Mittel zur geregelten Energieversorgung der Motoren, die Steuersignale empfangen,
- einen Prozessor, der die indikativen Signale über die Position des Lenkers (14), die momentane lineare Geschwindigkeit des Fahrzeugs (1), das vom Fahrer des Fahrzeugs (1) am Lenker (14) angelegte Drehmoment und das vom Fahrer des Fahrzeugs (1) geforderte gesamte Motordrehmoment empfängt und die Steuersignale für die Mittel zur geregelten Energieversorgung der Motoren erzeugt,
- Mittel zur Übertragung der Steuersignale an die Energieversorgungsmittel, wobei der Prozessor dazu eingerichtet ist, die folgenden Schritte auszuführen
- Berechnung eines vom Hauptmotor zu liefernden Drehmoments und eines zu liefernden Drehmoments, das dem vom Fahrer des Fahrzeugs (1) geforderten gesamten Motordrehmoment entspricht,
- Berechnung eines Gesamtdifferenzmoments anhand der indikativen Signale der momentanen linearen Geschwindigkeit des Fahrzeugs (1), des vom Fahrer des Fahrzeugs (1) am Lenker (14) ausgeübten Drehmoments und der Position des Lenkers (14),
- Berechnung der von jedem der beiden sekundären Elektromotoren zu liefernden Motordrehmomente aus dem vom Gesamtsatz der sekundären Elektromotoren zu liefernden Drehmoment und dem Gesamtdifferenzmoment,
- Erzeugung und Übermittlung an die Mittel zur geregelten Energieversorgung der Motoren der Steuerungssignale, die erforderlich sind, damit die auf Ebene der sekundären Elektromotoren berechneten Motordrehmomente von den sekundären Elektromotoren bereitgestellt werden;
**gekennzeichnet dadurch, dass** in einer Kurvensituation das vom sekundären Elektromotor des außen in der Kurve liegenden lenkbaren Rads (12 b) abgegebene Motordrehmoment sich von dem vom sekundären Elektromotor des innen in der Kurve liegenden lenkbaren Rads (12 a) abgegebene Motordrehmoment unterscheidet, und dadurch, dass
- wenn die momentane lineare Geschwindigkeit des Fahrzeugs unter der Schwellengeschwindigkeit v1 liegt, das vom sekundären Elektromotor des außen in der Kurve liegenden lenkbaren Rads (12b) abgegebene Motordrehmoment größer bzw. kleiner ist als das vom sekundären Elektromotor des innen in der Kurve liegenden lenkbaren Rads (12a) abgegebene Motordrehmoment, wenn das Fahrzeug in der Beschleunigungsphase bzw. in der Verzögerungsphase ist; und/oder
- wenn die momentane lineare Geschwindigkeit des Fahrzeugs (1) über der Schwellengeschwindigkeit v1 liegt, das vom sekundären Elektromotor des außen in der Kurve liegenden lenkbaren Rads (12b) abgegebene Motordrehmoment geringer bzw. größer ist als das vom sekundären Elektromotor des innen in der Kurve liegenden lenkbaren Rads (12a) abgegebene Motordrehmoment, wenn das Fahrzeug (1) in der Beschleunigungsphase bzw. in der Verzögerungsphase ist.

**Claims**

1. A method for assisting the turning of a motorized rolling vehicle (1) comprising:

  - exactly three wheels, including two steering wheels (12) steered by means of handlebars (14) and one non-steering wheel (13)
  - a main thermal or electric motor capable of supplying engine power to the non-steering wheel (13),
  - two electric motors, known as secondary electric motors, each connected to one of the two steering wheels (12),
  - means for controlled power supply the motors receiving control signals,
  - a processor receiving indicative signals of a position of the handlebar (14), an instantaneous linear speed of the vehicle (1), a torque applied to the handlebar by the driver of the vehicle (1) and a total motor torque requested by the driver of the vehicle (1), and producing the control signals of the controlled motor power supply means,
  - means for transmitting the control signals to the power supply means,

  in which the following steps are performed at the processor level:

  - calculation of the torque to be supplied by the main motor and a torque to be supplied by all the secondary motors so that the sum of the torques to be supplied is equal to the total motor torque requested by the vehicle driver (1),
  - calculation of a total differential torque from the indicative signals of an instantaneous linear speed of the vehicle (1), the torque applied to the handlebars (14) by the driver of the vehicle, and a position of the handlebar (14),
  - calculation of the motor torques to be supplied by each of the two electric motors based on the torque to be supplied by the combination of the two electric motors and the total differential torque,
  - generation and transmission to the motor power supply control means of the control signals necessary so that the calculated motor torques are supplied by the secondary electric motors;

  **characterized in that**, during a turn, the motor torque supplied by the secondary motor of the outer steering wheel in the turn (12b) is different from the motor torque supplied by the secondary motor of the inner steering wheel in the turn (12a), and **in that**:

  - if the instantaneous linear speed of the vehicle is less than a threshold speed v1, the motor torque supplied by the secondary motor of the outer steering wheel in the turn (12b) is higher, respectively lower than, the motor torque supplied by the secondary motor of the inner steering wheel in the thurn (12a) if the vehicle is in the acceleration phase, respectively in the deceleration phase ; and/or
  - if the instantaneous linear speed of the vehicle (1) is greater than a threshold speed v1, the motor torque supplied by the secondary motor of the outer steering wheel in the turn (12b)is lower, respectively higher, than, the motor torque supplied by the secondary motor of the inner steering wheel in the turn (12a) if the vehicle (1) is in the acceleration phase, respectively in the deceleration phase.

2. Turning assistance method according to claim 1, **characterized in that** the calculated total differential torque is the sum of two terms:

  - the first term of the total differential torque is calculated from the indicative signals of the position of the handlebar (14) and the instantaneous linear speed of the vehicle (1),
  - the second term of the total differential torque is calculated from the indicative signals of the instantaneous linear speed of the vehicle (1) and the torque applied on the handlebar (14) by the driver of the vehicle, so that this second term of the total differential torque is proportional to the torque applied by the driver of the vehicle (1) along the axis of the handlebar (14).

3. Turning assistance method according to any one of claims 1 to 2 **characterized in that** said processor is configured to generate a turn entry signal and/or a turn exit signal.

4. Turning assistance method according to claim 3, **characterized in that** it comprises at least one of the following steps:

  a) the calculated total differential torque is applied in response to the turn entry signal,
  b) the first calculated differential torque term is progressively reduced until canceled,
  c) the second calculated term is replaced by its opposite in response to the turn exit signal.

5. Turning assistance method according to claim 3 **characterized in that** the turn entry signal is generated by the processor in response to an increase in absolute value of the torque applied to the handlebar (14) by the vehicle driver.

6. Turning assistance method according to any one of claims 3 to 5, **characterized in that** the vehicle (1) further comprises an inertial unit transmitting pitch, roll and yaw indicator signals to the vehicle (1) and the turn exit signal is generated by the processor from at least one of the pitch or roll or yaw indicator signals and the handlebar position indicator signal (14).

7. Turning assistance method according to any one of claims 1 to 6 **characterized in that** the calculated total differential torque is limited by an upper bound.

8. Turning assistance method according to any one of claims 1 to 7 **characterized in that** the secondary electric motors can operate as receivers so as to recharge a battery.

9. Turning assistance method according to any one of claims 1 to 8 **characterized in that** the motor torques supplied by the main and secondary motors are further calculated to optimize the thermal and/or electrical energy consumption of the vehicle (1).

10. Computer program comprising program code instructions for executing the steps of the process according to any one of claims 1 to 9 when the program is executed on a computer.

11. Motorized rolling vehicle (1) comprising:

   - exactly three wheels, including two steering wheels (12) steered by means of handlebars (14) and one non-steering wheel (13),
   - a main thermal or electric motor capable of supplying engine power to the non-steering wheel (13),
   - two electric motors, known as secondary electric motors, each connected to one of the two steering wheels (12),
   - means for controlled power supply the motors receiving control signals,
   - a processor receiving indicative signals of a position of the handlebar (14), an instantaneous linear speed of the vehicle (1), a torque applied to the handlebar by the driver of the vehicle (1) and a total motor torque requested by the driver of the vehicle (1), and producing the control signals of the controlled motor power supply means,
   - means for transmitting the control signals to the power supply means,
   in which the following steps are performed at the processor level:

      - calculation of the torque to be supplied by the main motor and a torque to be supplied by all the secondary motors so that the sum of the torques to be supplied is equal to the total motor torque requested by the vehicle driver (1),
      - calculation of a total differential torque from the indicative signals of an instantaneous linear speed of the vehicle (1), the torque applied to the handlebars (14) by the driver of the vehicle, and a position of the handlebar (14),
      - calculation of the motor torques to be supplied by each of the two electric motors based on the torque to be supplied by the combination of the two electric motors and the total differential torque,
      - generation and transmission to the motor power supply control means of the control signals necessary so that the calculated motor torques are supplied by the secondary electric motors;

      **characterized in that**, during a turn, the motor torque supplied by the secondary motor of the outer steering wheel in the turn (12b) is different from the motor torque supplied by the secondary motor of the inner steering wheel in the turn (12a), and **in that**:

         - if the instantaneous linear speed of the vehicle is less than a threshold speed v1, the motor torque supplied by the secondary motor of the outer steering wheel in the turn (12b) is higher, respectively lower than, the motor torque supplied by the secondary motor of the inner steering wheel in the thurn (12a) if the vehicle is in the acceleration phase, respectively in the deceleration phase ; and/or
         - if the instantaneous linear speed of the vehicle (1) is greater than a threshold speed v1, the motor torque supplied by the secondary motor of the outer steering wheel in the turn (12b) is lower, respectively higher, than, the motor torque supplied by the secondary motor of the inner steering wheel in the turn (12a) if the vehicle (1) is in the acceleration phase, respectively in the deceleration phase.

Figure 1

Figure 2

Figure 3

R

Trajectoire à suivre
par la moto

12a

FMEg

d

Cass gui

v<v seuil

1

FMEd

12b

Figure 4

12b

FMEg

1

d

Cass gui

FMP

FMEd

v<v seuil

12a

R

Trajectoire
à suivre
par la moto

Figure 5

Figure 6

Figure 7

```
┌──────────────────────────────────────────────┐
│    ┌─────────────────────┐      ┌─────────────────────┐
│    │   Entrée virage ?   │◄─────│ Informations centrale│
│    │   Sortie virage ?   │      │     inertielle      │
│    └─────────────────────┘      └─────────────────────┘
```

|  |  |
|---|---|
| Entrée virage ?<br>Sortie virage ? | Informations centrale inertielle |

| Angle guidon | Vitesse moto | Couple guidon |
|---|---|---|

Calcul δ1

Calcul δ2

+

| Limitation:<br>Si δ1 + δ2 > seuil<br>Alors δ1 + δ2 prend<br>la valeur seuil |
|---|

| Phase d'accélération?<br>Phase de freinage? |
|---|

| Informations centrale inertielle:<br>virage? à gauche? à droite? | Vitesse moto > Vseuil? |
|---|---|

| Calcul couple moteur<br>électrique roue avant<br>intérieure au virage | Calcul couple moteur<br>électrique roue avant<br>extérieure au virage |
|---|---|

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2465352 A
- CN 108177692

- EP 3421341 A1
- EP 3115241 A2